# FASCICULE DE BREVET EUROPEEN

(11) **EP 0 695 625 B1**
(45) Date de publication et mention de la délivrance du brevet: **07.07.1999**
(21) Numéro de dépôt: 95401773.7
(22) Date de dépôt: 26.07.1995
(51) Int. Cl.: B29C 65/72, B65D 13/00, A45D 34/00

(54) **Pièce en résine synthétique en deux parties et son procédé de fabrication**
Zweiteiliger Gegenstand aus Kunstharz und Verfahren zu seiner Herstellung
Two-part object made of synthetic resin and method for its production

(30) Priorité: 01.08.1994 FR 9409533
(43) Date de publication de la demande: 07.02.1996
(73) Titulaire: Société dite: LIR FRANCE(S.A.), F-94669 Chevilly-Larue (FR)
(72) Inventeur: Favre, Bernard, F-92330 Sceaux (FR)
(74) Mandataire: Dawidowicz, Armand

(56) Documents cités:
- DE-A- 2 645 771
- DE-A- 3 612 694
- FR-A- 1 242 602
- FR-A- 1 480 404
- FR-A- 2 377 265
- FR-A- 2 526 757
- US-A- 2 076 550
- US-A- 4 047 633

## Description

L'invention concerne une pièce en résine synthétique pouvant être utilisée notamment pour le conditionnement des produits cosmétiques, parfums et similaires et son procédé de fabrication.

Les pièces en résine synthétique peuvent présenter des ornements et décorations à leur surface extérieure, en particulier sous forme de décorations métalliques brillantes or ou argent.

Des méthodes classiques sont connues pour créer ce genre d'ornementation et consistent à appliquer un dépôt électrolytique sur une pièce prémoulée ou à la galvaniser ou bien encore à utiliser un film de transfert thermique. Outre le fait que ces méthodes entraînent rapidement des problèmes d'application dès que les pièces en question présentent des formes complexes, il s'avère également nécessaire d'appliquer une couche protectrice de l'ornement formé, ce qui augmente singulièrement le coût du procédé de fabrication.

D'autres méthodes sont connues et proposent de créer un procédé de fabrication d'une pièce en résine synthétique présentant un ornement indépendamment de la forme de ladite pièce.

Ainsi, selon FR-A-2 526 757, pour la réalisation d'un flacon par exemple, un élément tubulaire relativement mince en un matériau mou est formé et présente à sa surface extérieure un ornement quelconque désiré. Cet élément est ensuite inséré dans une pièce extérieure translucide et son diamètre interne est tel que le périmètre calculé développé épouse étroitement le périmètre intérieur de la pièce extérieure. Le tout est ensuite surmoulé par l'intérieur par une résine synthétique grâce à un noyau de moule de manière à présenter les éléments d'assemblage et de retenue du flacon ainsi fabriqué. Cependant, malgré ses avantages, ce type de procédé entraîne des manipulations importantes et un outillage coûteux et, par conséquent présente un prix de revient élevé qui représente un inconvénient considérable lors d'une fabrication en grande série de ce type de pièce.

Le document US-A-4.047.633 propose simplement d'insérer une image d'ornementation dans l'espace créé à cet effet entre les parois de deux bacs encastrés l'un dans l'autre, les bords des bacs pouvant ensuite être assemblés de manière permanente. Cependant, un tel dispositif n'est pas satisfaisant dans la mesure où l'image d'ornementation doit être portée par une feuille plastique accueillie dans l'espace entre les parois, ce qui augmente le coût de production tandis que ce même dit espace peut en cas d'assemblage incorrect des parois conduire à la souillure de l'ornementation en permettant des infiltrations d'air ou de produit.

L'invention vise donc à améliorer ce type de production en proposant une pièce en résine synthétique et un procédé de fabrication permettant une production simple et à un coût beaucoup moins élevé.

L'invention consiste en une pièce en résine synthétique comportant une partie extérieure translucide ou semi-translucide et une partie intérieure comportant sur sa surface extérieure un ornement, caractérisée en ce que lesdites parties extérieure et intérieure comportent des moyens d'assemblage complémentaires et sont assemblées par clipsage et soudage ultrasonique.

L'invention consiste également en un procédé de fabrication d'une telle pièce en résine synthétique, caractérisé en ce qu'on moule conformément à la forme de pièce souhaitée une partie extérieure de ladite pièce, translucide ou semi-translucide, comportant des moyens d'assemblage, on moule ensuite une partie intérieure de forme correspondante, comportant des moyens d'assemblage correspondant auxdits moyens d'assemblage de la partie extérieure et on applique un ornement ou une décoration sur la surface extérieure de la partie intérieure, puis on assemble par clipsage les deux parties intérieure et extérieure de la pièce à l'aide des moyens d'assemblage et soude par ultrasons lesdites deux parties intérieure et extérieure.

Avantageusement, la paroi extérieure de la partie intérieure repose le long de la paroi intérieure de la partie extérieure sans qu'aucun espace ne soit laissé entre elle.

La forme de la pièce en résine synthétique peut être avantageusement de section circulaire, carrée, rectangulaire, ovale ou toute autre forme souhaitée pour ladite pièce.

Le moulage est effectué de manière à donner aux parties extérieure et intérieure une forme déterminée en fonction de la pièce désirée et de manière à ce que lesdites parties présentent des moyens d'assemblage permettant leur assemblage l'une avec l'autre par clipsage.

Ainsi, la partie extérieure translucide est un élément formé par moulage, par exemple, à partir d'une résine synthétique translucide ou semi-translucide. De manière avantageuse, le moule de la partie extérieure peut également être conçu pour conférer à ladite partie une surface extérieure présentant des éléments de décoration supplémentaires tels que des rainures, des creux, des bosses, etc.

Avantageusement, la partie intérieure peut être formée de préférence en une résine thermoplastique choisie parmi le groupe constitué par les résines de polyoléfine, de polyamide, de PVC, de téréphtalate de polyéthylène et de méthylpentène.

Avant l'assemblage des deux parties, ladite partie intérieure est pourvue des ornements souhaités. Ainsi, elle peut faire l'objet d'une métallisation sur sa surface extérieure. L'ornement ou la décoration peut également être mis en place par l'utilisation d'un film de transfert thermique ou par impression.

Les parties intérieure et extérieure sont assemblées de manière à ce que la face décorée de la partie intérieure puisse être vue derrière la partie extérieure translucide. Le soudage est ensuite réalisé par ultrasons et permet une solide fixation des parties entre elles.

Ainsi, dès lors que les deux parties intérieure et extérieure sont assemblées l'une sur l'autre, le décor ou l'ornement se trouve visible mais est avantageusement protégé par la partie extérieure et ne craint donc plus de détériorations en empêchant les vapeurs du produit renfermé et/ou le produit lui-même de pénétrer et de stagner entre les deux parties de la pièce dans la zone, par exemple métallisée, évitant ainsi des attaques de la décoration ou l'altération de l'aspect visible par transparence.

L'invention sera bien comprise à la lecture de la description suivante d'un exemple de réalisation d'une pièce en résine synthétique, faite en référence au dessin annexé dans lequel :

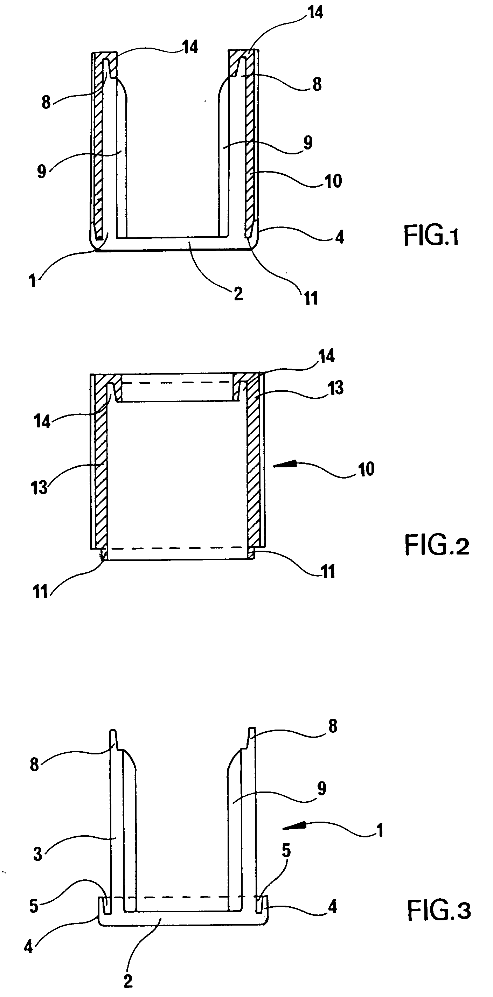

la figure 1 représente une vue en coupe de la pièce selon un exemple de réalisation de l'invention,
la figure 2 représente une vue en coupe de la partie extérieure de la pièce selon la figure 1,
la figure 3 représente une vue en coupe de la partie intérieure de la pièce selon la figure 1 et
la figure 4 représente une vue en élévation latérale de la pièce selon la figure 1.

Selon l'exemple représenté et décrit, on réalise un flacon pour produits cosmétiques. On réalise tout d'abord la partie intérieure 1 de la pièce par moulage d'une résine thermoplastique. La partie intérieure 1 est formée par un élément tubulaire de section circulaire dont l'une des extrémités est fermée par un fond 2. La partie intérieure 1 présente à ses deux extrémités des moyens d'assemblage.

Ainsi, le fond 2 de l'élément tubulaire présente un diamètre plus grand que le diamètre de la portion tubulaire 3 de manière à former une saillie 4 tout le long de sa périphérie, une partie repliée de la saillie 4 s'étendant parallèlement à la portion tubulaire 3. Ainsi, entre la portion tubulaire 3 et la saillie 4 se forme un logement 5. La portion tubulaire 3 de la partie intérieure 1 présente également à son extrémité ouverte une saillie 8 de la surface extérieure de la portion tubulaire 3 tout le long de sa périphérie.

La surface extérieure de la portion tubulaire 3 et du fond 2 est ensuite décorée ou ornée selon un décor quelconque souhaité. Dans le cas présent, on réalise un traitement de métallisation suivi avantageusement d'une application de vernis UV pour protection. La surface intérieure 9 de la partie intérieure 1 reste vierge de tout décor ou ornement et constitue l'intérieur de la pièce.

On réalise ensuite le moulage de la partie extérieure translucide ou transparente 10. Cette partie extérieure 10 se présente sous la forme d'un élément tubulaire dont le diamètre intérieur correspond au diamètre extérieur de la partie intérieure 1 et qui est ouvert à ses deux extrémités. Il présente à une extrémité une saillie 11 sur sa surface interne s'étendant vers l'extérieur. A l'autre extrémité, sa paroi latérale 13 se replie vers l'intérieur de l'élément tubulaire 10 et forme alors un logement 14.

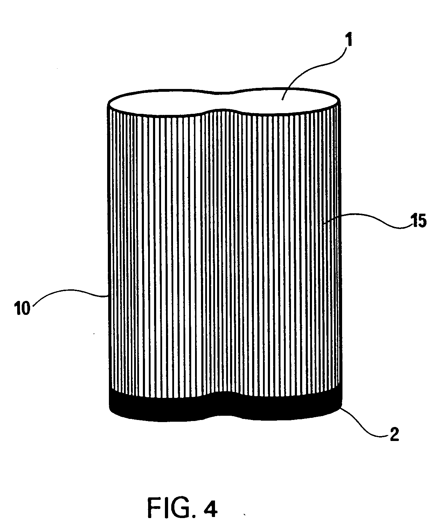

Le moulage de la partie extérieure peut être effectué de telle sorte que la surface extérieure de celle-ci peut présenter elle-même des reliefs décoratifs supplémentaires tels que des rainures 15 comme on peut le voir sur la figure 4.

Les deux parties intérieure 1 et extérieure 10 sont assemblées par insertion de la partie intérieure 1 dans la partie extérieure 10 de manière à ce que la saillie 11 de la partie extérieure 10 se place dans le logement 5 de la partie intérieure 1 et que la saillie 8 de la partie intérieure 1 se place dans le logement 14 de la partie extérieure 10. On soude ensuite les parties intérieure et extérieure par soudage ultrasonique, ce qui garantit la solidité et l'étanchéité de la pièce ainsi formée.

On a ainsi fabriqué facilement et économiquement une pièce en résine synthétique dont la partie extérieure translucide ou semi-translucide laisse voir ou entrevoir à son travers un décor qui se trouve ainsi protégé de toute agression extérieure et qui est par conséquent indélébile. Le procédé selon l'invention permet une fabrication simple avec un nombre de manipulations réduit.

Bien entendu, toute forme peut être donnée à la pièce selon l'invention et peut être facilement mise en oeuvre selon le procédé de l'invention.

## Revendications

1. Pièce en résine synthétique comportant une partie extérieure (10) translucide ou semi-translucide et une partie intérieure (1) comportant sur sa face extérieure un ornement, en particulier une métallisation or ou argent,
caractérisée en ce que lesdites parties extérieure (10) et intérieure (1) comportent des moyens d'assemblage (8, 14; 5, 11) complémentaires et sont assemblées par clipsage et soudage ultrasonique.

2. Pièce en résine synthétique selon la revendication 1,
caractérisée en ce que la partie intérieure (1) est formée d'une résine thermoplastique.

3. Pièce selon la revendication 2,
caractérisée en ce que la résine thermoplastique est choisie dans le groupe constitué par les résines de polyoléfine, de polyamide, de PVC, de téréphtalate de polyéthylène et de méthylpentène.

4. Pièce selon l'une quelconque des revendications 1 à 3,
caractérisée en ce que la partie extérieure (10) est constituée d'une résine synthétique translucide ou semi-translucide.

5. Pièce selon l'une des revendications 1 à 4,
caractérisée en ce que la partie intérieure (1) est un élément tubulaire comportant un fond (2) de plus grande section transversale que la partie tubulaire dudit élément et qui présente un bord relevé (4) s'étendant le long de la portion tubulaire (3) de l'élément tubulaire créant un logement (5), ledit élément présentant à son extrémité ouverte opposée audit fond (2) une saillie (8) sur sa face extérieure et la partie extérieure (10) est un élément tubulaire de dimensions correspondant à la partie intérieure (1), dont l'une des extrémités présente une saillie (11) de sa surface interne logée dans ledit logement (5) de la partie intérieure (1) et dont l'autre extrémité présente un bord replié (15) vers l'intérieur de l'élément tubulaire créant un logement (14) dans lequel est logée ladite saillie (8) de la partie intérieure (1).

6. Pièce selon l'une des revendications 1 à 5,
caractérisée en ce que la partie extérieure (10) est munie de reliefs décoratifs (15) sur sa face extérieure.

7. Procédé de fabrication d'une pièce en résine synthétique, selon l'une quelconque des revendications 1 à 6,
caractérisé en ce qu'on moule conformément à la forme de pièce souhaitée une partie extérieure (10) de ladite pièce, translucide ou semi-translucide comportant des moyens d'assemblage (11, 14), on moule ensuite une partie intérieure (1) de forme correspondante comportant des moyens d'assemblage (8, 5) correspondant auxdits moyens d'assemblage (11, 14) de la partie extérieure (10), on applique un ornement ou une décoration sur la surface extérieure de ladite partie intérieure (1), puis on assemble par clipsage les deux parties intérieure (1) et extérieure (10) de la pièce à l'aide des moyens d'assemblage (8, 14; 5, 11) et on soude par ultrasons les parties extérieure (10) et intérieure (1).

8. Procédé de fabrication d'une pièce en résine synthétique selon la revendication 7,
caractérisé en ce que on applique une décoration par métallisation de la surface extérieure de la partie intérieure (1).

9. Procédé de fabrication selon la revendication 7,
caractérisé en ce qu'on applique une décoration par revêtement thermique à la surface extérieure de la partie intérieure.

## Claims

1. Item formed from synthetic resin, comprising a translucid or semi-translucid external portion (10) and an internal portion (1) which has, on its external face, an ornamentation, more especially a gold or silver metallisation, characterised in that said external portion (10) and internal portion (1) comprise complementary assembly means (8, 14; 5, 11) and are assembled by clipping and ultrasonic welding.

2. Item formed from synthetic resin according to claim 1, characterised in that the internal portion (1) is formed from a thermoplastic resin.

3. Item according to claim 2, characterised in that the thermoplastic resin is selected from the group comprising polyolefin, polyamide, PVC, polyethylene terephthalate and methylpentene resins.

4. Item according to any one of claims 1 to 3, characterised in that the external portion (10) is formed from a translucid or semi-translucid synthetic resin.

5. Item according to one of claims 1 to 4, characterised in that the internal portion (1) is a tubular element, which includes a base (2) of greater cross-section than the tubular portion of said element, and which has a raised edge (4) extending along the tubular portion (3) of the tubular element and creating a housing (5), said element having, at its open end opposite said base (2), a projection (8) on its external face, and the external portion (10) is a tubular element with dimensions corresponding to the internal portion (1), one of the ends of which has a projection (11) of its inner surface accommodated in said housing (5) of the internal portion (1), and the other end of which has an edge (15) folded-back towards the interior of the tubular element so as to create a housing (14) in which said projection (8) of the internal portion (1) is accommodated.

6. Item according to one of claims 1 to 5, characterised in that the external portion (10) is provided with decorative reliefs (15) on its external face.

7. Method of manufacturing an item formed from synthetic resin according to any one of claims 1 to 6, characterised in that an external portion (10) of said item, translucid or semi-translucid, is moulded according to the desired shape of the item and comprises assembly means (11, 14), an internal portion (1) of corresponding shape is then moulded and comprises assembly means (8, 5) corresponding to said assembly means (11, 14) of the external portion (10), an ornamentation or a decoration is applied to the external surface of said internal portion (1), then the internal portion (1) and the external portion (10) of the item are assembled by clipping by means of the assembly means (8, 14; 5, 11), and the external portion (10) and the internal portion (1) are welded by ultrasound.

8. Method of manufacturing an item formed from synthetic resin according to claim 7, characterised in that a decoration is applied by metallising the external surface of the internal portion (1).

9. Method of manufacture according to claim 7, characterised in that a decoration is applied to the external surface of the internal portion by thermal coating.

## Patentansprüche

1. Gegenstand aus Kunstharz, umfassend einen transparenten oder halbtransparenten äußeren Teil (10) und einen inneren Teil (1), der auf seiner Außenfläche ein Ornament, insbesondere eine Gold- oder Silbermetallisierung umfaßt,
**dadurch gekennzeichnet**, daß die besagten äußeren (10) und inneren (1) Teile formschlüssige Verbindungsmittel (8, 14; 5, 11) umfassen und durch Aufklemmen und Ultraschallschweißen zusammengefügt sind.

2. Gegenstand aus Kunstharz nach Anspruch 1,
**dadurch gekennzeichnet,** daß der innere Teil (1) aus einem thermoplastischen Harz besteht.

3. Gegenstand nach Anspruch 2,
**dadurch gekennzeichnet,** daß das thermoplastische Harz aus der Gruppe ausgewählt wird, die aus den Polyolefin-, Polyamid-, PVC-, Polyethylenterephthalat- und Methylpenten-Harzen besteht.

4. Gegenstand nach einem der Ansprüche 1 bis 3,
**dadurch gekennzeichnet,** daß der äußere Teil (10) aus einem transparenten oder halbtransparenten Kunstharz besteht.

5. Gegenstand nach einem der Ansprüche 1 bis 4,
**dadurch gekennzeichnet,** daß der innere Teil (1) ein rohrförmiges Element ist, das einen Boden (2) mit größerem Querschnitt als der rohrförmige Teil des besagten Elements umfaßt, der einen hochgezogenen Rand (4) aufweist, der sich entlang dem rohrförmigen Abschnitt (3) des rohrförmigen Elements erstreckt, wodurch eine Aufname (5) gebildet wird, wobei das besagte Element an seinem dem besagten Boden (2) gegenüberliegenden offenen Ende einen Vorsprung (8) auf seiner Außenfläche aufweist, während der äußere Teil (10) ein rohrförmiges Element mit dem inneren Teil (1) entsprechenden Abmessungen ist, das an einem seiner Enden einen Vorsprung (11) seiner Innenfläche aufweist, der in der besagten Aufnahme (5) des inneren Teils (1) aufgenommen ist, und das an seinem anderen Ende einen zum Innern des rohrförmigen Elements umgebogenen Rand (15) aufweist, wodurch eine Aufnahme (14) gebildet wird, in der der besagte Vorsprung (8) des inneren Teils (1) aufgenommen ist.

6. Gegenstand nach einem der Ansprüche 1 bis 5,
**dadurch gekennzeichnet,** daß der äußere Teil (10) mit Zierreliefs (15) auf seiner Außenfläche versehen ist.

7. Verfahren zur Herstellung eines Gegenstands aus Kunstharz nach einem der Ansprüche 1 bis 6,
**dadurch gekennzeichnet,** daß entsprechend der gewünschten Form des Gegenstands ein transparenter oder halbtransparenter äußerer Teil (10) des besagten Gegenstands geformt wird, der Verbindungsmittel (11, 14) umfaßt, woraufhin ein innerer Teil (1) mit entsprechender Form geformt wird, der Verbindungsmittel (8, 5) entsprechend den besagten Verbindungsmitteln (11, 14) des äußeren Teils (10) umfaßt, wobei ein Ornament oder eine Verzierung auf der Außenfläche des besagten inneren Teils (1) angebracht wird, woraufhin die zwei inneren (1) und äußeren (10) Teile des Gegenstands durch Aufklemmen anhand der Verbindungsmittel (8, 14; 5, 11) zusammengefügt und die äußeren (10) und inneren (1) Teile mittels Ultraschallschweißen zusammengeschweißt werden.

8. Verfahren zur Herstellung eines Gegenstands aus Kunstharz nach Anspruch 7,
**dadurch gekennzeichnet,** daß eine Verzierung durch Metallisierung der Außenfläche des inneren Teils (1) angebracht wird.

9. Herstellungsverfahren nach Anspruch 7,
**dadurch gekennzeichnet,** daß eine Verzierung durch thermische Beschichtung auf der Außenfläche des inneren Teils angebracht wird.
